# EUROPÄISCHE PATENTSCHRIFT

(11) **EP 1 995 084 B1**
(45) Veröffentlichungstag und Bekanntmachung des Hinweises auf die Patenterteilung: **09.06.2010**
(21) Anmeldenummer: 08450049.5
(22) Anmeldetag: 01.04.2008
(51) Int. Cl.: B60D 1/06, B60D 1/28

(54) **Niederhalter**
Binder
Système d'assujettissement

(30) Priorität: 22.05.2007 AT 7992007
(43) Veröffentlichungstag der Anmeldung: 26.11.2008
(73) Patentinhaber: Scharmüller, Erika, 4892 Fornach (AT)
(72) Erfinder: Scharmüller, Erika, 4892 Fornach (AT)
(74) Vertreter: Gibler & Poth Patentanwälte OEG

(56) Entgegenhaltungen:
- EP-A- 1 437 241
- BE-A- 429 538
- US-A- 5 683 094

## Beschreibung

Die Erfindung betrifft einen Niederhalter gemäß dem Oberbegriff des Patentanspruches 1.

Es ist bekannt,bei Kupplungen mit einer Kupplungskugel einen Niederhalter vorzusehen, der ein Abheben einer auf die Kupplungskugel aufgesetzten Zugöse verhindert. Durch die Relativbewegung zwischen der Zugöse und dem Niederhalter tritt bei dem Niederhalter ein Verschleiß auf. Insbesondere bei dem Einsatz mehrerer Zugösen kann es zu einem vermehrten Verschleiß kommen.

Aus der EP 1 437 241 A1 ist eine Pick-up-hitch Anhängerkupplung mit einem gattungsgemäßen Niederhalter zum Halten einer auf einer Kupplungskugel angeordneten Zugöse bekannt.

Aufgabe der Erfindung ist es, einen Niederhalter der eingangs genannten Art anzugeben, mit welchem die genannten Nachteile vermieden und mit welchem der Verschleiß des Niederhalters gering gehalten werden kann, ein sicherer Halt der Zugöse auf der Kupplungskugel sichergestellt werden kann, und der einfach und kostengünstig herstellbar ist. Erfindungsgemäß wird dies durch die Merkmale des Patentanspruches 1 erreicht.

Durch die verschwenkbare Anordnung des Kontaktelementes in dem Niederhaltergehäuse können Maßungenauigkeiten ausgeglichen werden, wodurch eine flächige Auflage des Kontaktelementes auf der Zugöse sichergestellt wird. Bei einem Wechsel der Zugöse stellt sich das Kontaktelement jeweils an die derzeit verwendete Zugöse ein, wodurch eine weitgehend flächige Auflage des Kontaktelementes auf der Zugöse erreicht wird Eine flächige Auflage bietet einen guten Halt der Zugöse auf der Kupplungskugel, insbesondere wenn mittels des Kontaktelementes eine Haltekraft auf die Zugöse ausgeübt wird. Weiters können bei einer flächigen Auflage die Spannungen in dem Kontaktelement gering gehalten werden, wodurch eine geringe Ausfallswahrscheinlichkeit und eine hohe Lebensdauer der Teile erreicht wird.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigesehlossenen Zeichnungen, in welchen lediglich bevorzugte Ausführungsformen beispielhaft dargestellt sind, näher beschrieben. Dabei zeigt:
Fig. 1 eine Seitenansicht auf eine Ausführungsform eines erfindungsgemäßen Niederhalters;
Fig. 2 und 3 jeweils eine Seitenansicht auf den Niederhalter gemäß Fig. 1, mit einem verschwenkten Kontaktelement; und
Fig. 4 eine weitere Ausführungsform des erfindungsgemäßen Niederhalters im Schrägriss.

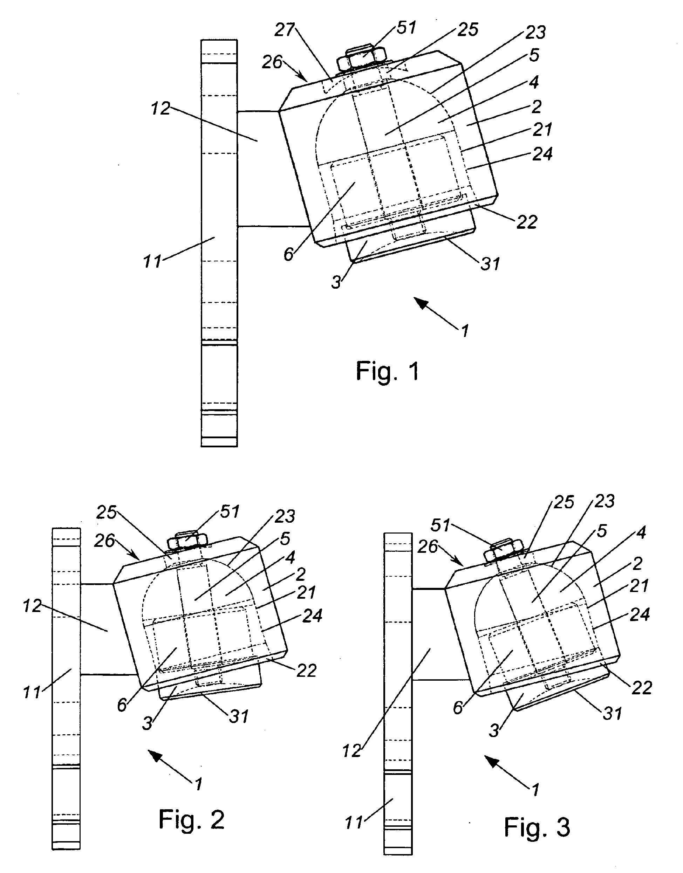

Die Fig. 1 bis 4 zeigen Ausführungsformen eines Niederhalters 1 zum Halten einer auf einer Kupplungskugel angeordneten Zugöse, mit einem Kontaktelement 3 zum Zusammenwirken mit der Zugöse.

Derartige Niederhalter 1 werden bei Kupplungen mit einer Kupplungskugel eingesetzt, wobei einerseits die Kupplungskugel und der Niederhalter 1 und andererseits die Zugöse auf einem Fahrzeug bzw. Anhänger montiert ist. Üblicherweise sind die Kupplungskugel und der Niederhalter 1 am Zugfahrzeug montiert.

Während des Kuppelvorgangs tritt eine Relativbewegung zwischen dem Niederhalter 1 und die Kupplungskugel auf, wobei im gekuppelten Zustand die Zugöse mit der Kupplungskugel und dem Niederhalter 1 in Kontakt ist und in einem offenen Zustand der Niederhalter 1 so weit von der Kupplungskugel entfernt ist, dass die Zugöse von der Kupplungskugel genommen werden kann.

Der Niederhalter 1 umfasst ein Niederhaltergehäuse 2 mit einer randoffenen Ausnehmung 21, wobei die randoffene Ausnehmung 21 eine Öffnung 22 zur Aufnahme des Kontaktelementes 3 aufweist. Das Kontaktelement 3 ist verschwenkbar in der randoffenen Ausnehmung 21 angeordnet.

Im gekuppelten Zustand ist die Zugöse mit dem Kontaktelement 3 in Kontakt. Dabei kann das Kontaktelement 3 als Verschleißteil ausgebildet sein, welches vorzugsweise eine geringere Festigkeit als die Oberfläche der Zugöse aufweist. Dadurch kann sichergestellt werden, dass bei dem Auftreten von Materialabtragungen die Zugöse weitgehend unbeschädigt bleibt.

Das Kontaktelement 3 kann ein Gleitmittel und/oder Schmieröffnungen umfassen, wodurch eine gute Gleitfähigkeit des Kontaktelementes 3 auf der Zugöse erreichbar ist.

Durch die verschwenkbare Anordnung des Kontaktelementes 3 in dem Niederhaltergehäuse 2 kann sich das Kontaktelement 3 selbsttätig so ausrichten, dass eine möglichst großflächige Auflage zwischen dem Kontaktelement 3 und der Zugöse ausgebildet wird, wodurch insbesondere Hersellungstoleranzen oder sonstige Maßabweichungen ausgeglichen werden können. Insbesondere kann auf eine Nachjustierung bei einem Wechsel der Zugöse verzichtet werden.

Das Kontaktelement 3 weist eine Kontaktfläche 31 auf, die zum Kontakt mit der Zugöse vorgesehen ist. Die Kontaktfläche 31 kann gegengleich zur Zugöse ausgebildet sein. Dabei weist die Kontaktfläche 31 üblicherweise eine nach innen gekrümmte Oberfläche auf.

Die randoffene Ausnehmung 21 kann im gekuppelten Zustand in der Nähe der Zugöse angeordnet sein und einen Schutz des Kontaktelementes 3 ausbilden. Dabei kann das Niederhaltergehäuse 2 in diesem Bereich zur Stabilität des Niederhalters 1 beitragen. Es kann weiters sichergestellt werden, dass von dem Kontaktelement 3 im Wesentlichen lediglich Druck- und Scherbeanspruchungen aufzunehmen sind.

An der der Öffnung 22 gegenüberliegenden Wandung der randoffenen Ausnehmung 21 kann ein erster kugelförmiger Bereich 23 ausgebildet sein. Mit dem ersten kugelförmigen Bereich 23 kann auf einfache Weise eine verschwenkbare Anordnung des Kontaktelementes 3 erreicht werden, wobei eine rotationssymmetrische Verschwenkbarkeit bereitgestellt werden kann.

Das Kontaktelement 3 kann einen dem ersten kugelförmigen Bereich 23 gegengleichen Bereich aufweisen, der mit dem ersten kugelförmigen Bereich 23 zusammenwirkt.

Es kann auch vorgesehen sein, dass in dem ersten kugelförmigen Bereich 23 ein dem ersten kugelförmigen Bereich 23 gegengleiches Zwischenstück 4 angeordnet ist, wobei das erste Zwischenstück 4 gegenüber dem Niederhaltergehäuse 2 verschwenkbar angeordnet ist und das Kontaktelement 3 mit dem Zwischenstück 4 verbunden ist. Dadurch kann auf einfache Weise eine unterschiedliche Materialkombination für das Ausbilden der verschwenkbaren Anordnung des Kontaktelementes 3 im Niederhaltergehäuse 2 und dem Zusammenwirken des Kontaktelementes 3 mit der Zugöse bereitgestellt werden. Weiters kann das Kontaktelement 3 besonders einfach ausgebildet werden, wodurch ein kostengünstiger Austausch ermöglicht wird.

Das Zwischenstück 4 verbleibt üblicherweise in dem Niederhaltergehäuse 2 und kann mit geringen Toleranzen hergestellt werden. Insbesondere kann vorgesehen sein, dass das Niederhaltergehäuse 2 aus Metall und das Zwischenstück 4 aus einem Kunststoffmaterial ist. Dadurch kann die erforderliche Kraft zum Verschwenken des Kontaktelementes 3 gering gehalten werden. Bei Bedarf kann dann das Zwischenstück 4 einfach ausgetauscht werden, wobei eine Beschädigung des Niederhaltergehäuses während des Betriebs weitgehend vermieden werden kann.

Bei der Verschwenkbewegung des Kontaktelementes 3 kann das Zwischenstück 4 im Wesentlichen eine Gleitbewegung in der randoffenen Ausnehmung 21 ausführen.

Zwischen der Öffnung 22 und dem ersten kugelförmigen Bereich 23 kann ein zylindrischer Bereich 24 ausgebildet sein, wobei das Kontaktelement 3 im Wesentlichen in dem zylindrischen Bereich 24 angeordnet ist.

In dem ersten kugelförmigen Bereich 23 kann eine Durchgangsöffnung 25 zu einer dem ersten kugelförmigen Bereich 23 gegenüberliegende Außenseite 26 des Niederhaltergehäuses 2 ausgebildet sein, wobei die Außenseite 26 im Bereich der Durchgangsöffnung 25 als zweiter kugelförmiger Bereich 27 ausgebildet ist und wobei der erste kugelförmige Bereich 23 und der zweite kugelförmige Bereich 27 im Wesentlichen konzentrisch sind.

An dem zweiten kugelförmigen Bereich 27 kann ein mit dem Kontaktelement 3 verbundenes Halteelement 5 mittels eines Abstützelementes 51 abgestützt sein, wobei das Abstützelement 51 auf dem zweiten kugelförmigen Bereich 27 verschiebbar angeordnet ist.

Das Halteelement 5 kann eine Schmieröffnung aufweisen. Insbesondere kann es einen durchgehenden Schmierkanal aufweisen, wodurch auf einfache Weise ein Schmiermittel in den Kontaktbereich zwischen dem Kontaktelement 3 und der Zugöse gebracht werden kann.

Auf diese Weise kann das Kontaktelement 3 einfach an dem Niederhaltergehäuse 2 abgestützt werden, wobei die konzentrische Ausgestaltung des ersten kugelförmigen Bereiches 23 und des zweiten kugelförmigen Bereiches 27 im Wesentlichen eine Starrkörperbewegung des Kontaktelementes 3 und des Halteelementes 5 um den gemeinsamen Mittelpunkt ermöglicht.

Die Verschwenkbarkeit des Kontaktelementes 3 gegenüber dem Niederhaltergehäuse 2 kann im Wesentlichen durch die Größe der Durchgangsöffnung 25 bestimmt sein.

Der zweite kugelförmige Bereich 27 ist im Betrieb auf einer der Zugöse abgewandten Seite des Niederhaltergehäuses 2 angeordnet. Weist die Zugöse Verkrustungen von Schmutz od. dgl. auf, welche durch die Relativbewegung der Zugöse gegenüber dem Kontaktelement 3 entfernt werden, so kann aufgrund der geschützten Anordnung des zweiten kugelförmigen Bereiches 27 eine Beschädigung des zweiten kugelförmigen Bereiches weitgehend vermieden werden.

Die Ablösung von weiter abstehenden Verkrustungen od. dgl. kann durch das in der Nähe der Zugöse angeordnete Niederhaltergehäuse 2 erfolgen.

Das Abstützelement 51 kann lösbar mit dem Halteelement 5 verbunden sein. Dadurch kann ein besonders einfaches Austauschen des Kontaktelementes 3 ermöglicht werden, wobei nach Lösen des Abstützelementes 51 vorgesehen sein kann, dass das Halteelement bei dem Herausnehmen des Kontaktelementes 3 aus der randoffenen Ausnehmung 21 durch die Durchgangsöffnung 25 geführt wird.

Anschließend kann vorgesehen sein, dass das Halteelement 51 von dem Kontaktelement 3 gelöst und durch ein neues Kontaktelement 3 ersetzt werden kann.

Zwischen dem Zwischenstück 4 und dem Kontaktelement 3 kann ein Dämpfungselement 6 angeordnet sein, wobei das Dämpfungselement 6 vorzugsweise als Federelement und/oder als Elastomerelement ausgebildet ist. Auf diese Weise kann das Kontaktelement 3 gefedert in dem Niederhaltergehäuse 21 angeordnet werden und bei dem Aufsetzen des Kontaktelementes 3 auf die Zugöse eine Haltekraft auf die Zugöse in Richtung der Kupplungskugel ausgeübt werden. Dadurch kann ein besonders ruhiges Fahrverhalten erreicht werden, wobei die unbelastete Zugöse immer fest auf der Kupplungskugel gehalten wird. Im Betrieb kann vorgesehen sein, dass Stöße in Richtung des Niederhalters 1 von dem Niederhaltergehäuse 2 aufgenommen werden.

Bei einer Kupplung mit einem oben beschriebenen Niederhalter 1 können oben beschriebenen Vorteile für die Kupplung bereitgestellt werden.

Der erfindungsgemäße Niederhalter 1 eignet sich insbesondere für den Einsatz bei einer Pick-Up-Hitch, welche eine Anbaukonsole und eine gegenüber der Anbaukonsole verschwenkbar gelagerte Schwenkkonsole aufweist. In der Schwenkkonsole kann ein Schlittenelement geführt sein. Dabei ist die Kupplungskugel mit dem Schlittenelement bzw. mit der Schwenkkonsole verbunden und der Niederhalter 1 mit der Anbaukonsole. Die Relativbewegung zwischen der Kupplungskugel und dem Niederhalter wird durch die Bewegung der Schwenkkonsole und des Schlittenelementes durchgeführt, wodurch eine feste Anbindung der Kupplungskugel mit dem Schlittenelement und des Niederhalters 1 mit der Anbaukonsole vorgesehen sein kann.

Für die Befestigung an der Anbaukonsole kann der Niederhalter eine Flanschplatte 11 aufweisen, mit der über ein Stegelement 12 das Niederhaltergehäuse 2 verbunden ist.

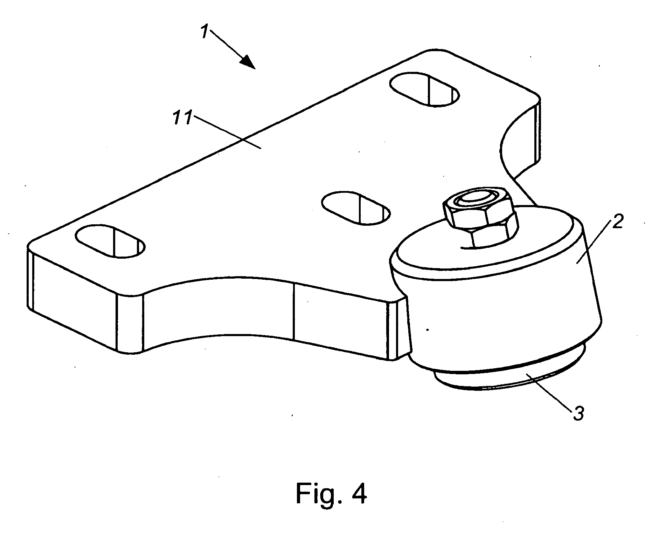

Bei der Ausführungsform gemäß Fig. 4 ist das Niederhaltergehäuse 2 unmittelbar mit der Flanschplatte 11 verbunden.

Bei anderen Ausführungsformen kann der Niederhalter 1 an einer Grundplatte befestigt sein, wobei auch die Kupplungskugel mit der Grundplatte verbunden ist. Dabei kann der Niederhalter 1 gegenüber der Grundplatte verschwenkbar und/oder verschiebbar angeordnet sein. Bei wieder anderen Ausführungsformen kann auch die Kupplungskugel gegenüber der Grundplatte verschwenkbar und/oder verschiebbar angeordnet sein.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Niederhalter (1) zum Halten einer auf einer Kupplungskugel angeordneten Zugöse, mit einem Kontaktelement (3) zum Zusammenwirken mit der Zugöse , wobei der Niederhalter (1) ein Niederhaltergehäuse (2) mit einer randoffenen Ausnehmung (21) umfasst, und die randoffene Ausnehmung (21) eine Öffnung (22) zur Aufnahme des Kontaktelementes (3) aufweist, **dadurch gekennzeichnet, dass** das Kontaktelement (3) verschwenkbar in der randoffenen Ausnehmung (21) angeordnet ist.

2. Niederhalter nach Anspruch 1, **dadurch gekennzeichnet, dass** an der der Öffnung (22) gegenüberliegenden Wandung der randoffenen Ausnehmung (21) ein erster kugelförmiger Bereich (23) ausgebildet ist.

3. Niederhalter nach Anspruch 2, **dadurch gekennzeichnet, dass** in dem ersten kugelförmigen Bereich (23) ein dem ersten kugelförmigen Bereich (23) gegengleiches Zwischenstück (4) angeordnet ist, wobei das erste Zwischenstück (4) gegenüber dem Niederhaltergehäuse (2) verschwenkbar angeordnet ist und das Kontaktelement (3) mit dem Zwischenstück (4) verbunden ist.

4. Niederhalter nach Anspruch 2 oder 3, **dadurch gekennzeichnet, dass** in dem ersten kugelförmigen Bereich (23) eine Durchgangsöffnung (25) zu einer dem ersten kugelförmigen Bereich (23) gegenüberliegenden Außenseite (26) des Niederhaltergehäuses (2) ausgebildet ist und die Außenseite (26) im Bereich der Durchgangsöffnung (25) als zweiter kugelförmiger Bereich (27) ausgebildet ist, wobei der erste kugelförmige Bereich (23) und der zweite kugelförmige Bereich (27) im Wesentlichen konzentrisch sind.

5. Niederhalter nach Anspruch 4, **dadurch gekennzeichnet, dass** ein mit dem Kontaktelement (3) verbundenes Halteelement (5) an dem zweiten kugelförmigen Bereich (27) mittels eines Abstützelementes (51) abgestützt ist, wobei das Abstützelement (51) auf dem zweiten kugelförmigen Bereich (27) verschiebbar angeordnet ist.

6. Niederhalter nach Anspruch 5, **dadurch gekennzeichnet, dass** das Abstützelement (51) lösbar mit dem Halteelement (5) verbunden ist.

7. Niederhalter nach einem der Ansprüche 3 bis 6, **dadurch gekennzeichnet, dass** zwischen dem Zwischenstück (4) und dem Kontaktelement (3) ein Dämpfungselement (6) angeordnet ist, wobei das Dämpfungselement (6) vorzugsweise als Federelement und/oder als Elastomerelement ausgebildet ist.

8. Kupplung mit einer Kupplungskugel und einem Niederhalter (1) gemäß einem der Ansprüche 1 bis 7.

## Claims

1. A retaining element (1) for holding a drawbar eye arranged on a hitch ball, comprising a contact element (3) for cooperating with the drawbar eye, with the retaining element (1) comprising a retaining element housing (2) with an open-edged recess (21), and the open-edged recess (21) comprises an opening (22) for receiving the contact element (3), **characterized in that** the contact element (3) is swivelably arranged in the open-edged recess (21).

2. A retaining element according to claim 1, **characterized in that** a first spherical area (23) is formed on the wall of the open-edged recess (21) which is opposite of the opening (22).

3. A retaining element according to claim 2, **characterized in that** an intermediate element (4) which is diametrically opposite to the first spherical area (23) is arranged in the first spherical area (23), with the first intermediate element (4) being swivelably arranged in relation to the retaining element housing (2) and the contact element (3) being connected with the intermediate element (4).

4. A retaining element according to claim 2 or 3, **characterized in that** a lead-through opening (25) to an outside (26) of the retaining element housing (2) which is opposite of the first spherical area (23) is formed in the first spherical area (23), and the outside (26) in the region of the lead-through opening (25) is arranged as a second spherical area (27), with the first spherical area (23) and the second spherical area (27) being substantially concentric.

5. A retaining element according to claim 4, **characterized in that** a holding element (5) connected with the contact element (3) is supported on the second spherical area (27) by means of a support element (51), with the support element (51) being displaceably arranged on the second spherical area (27).

6. A retaining element according to claim 5, **characterized in that** the support element (51) is detachably connected with the holding element (5).

7. A retaining element according to one of the claims 3 to 6, **characterized in that** a damping element (6) is arranged between the intermediate element (4) and the contact element (3), with the damping element (6) preferably being arranged as a spring element and/or an elastomeric element.

8. A hitch with a hitch ball and a retaining element (1) according to one of the claims 1 to 7.

## Revendications

1. Dispositif de maintien (1) pour le maintien d'un oeillet d'attelage disposé sur une boule d'attelage, avec un élément de contact (3) destiné à coopérer avec l'oeillet d'attelage, dans lequel le dispositif de maintien (1) comprend un logement de dispositif de maintien (2) avec un évidement ouvert sur le bord (21) et l'évidement ouvert sur le bord (21) présente une ouverture (22) pour recevoir l'élément de contact (3), **caractérisé en ce que** l'élément de contact (3) est disposé de façon pivotante dans l'évidement ouvert sur le bord (21).

2. Dispositif de maintien selon la revendication 1, **caractérisé en ce qu'**une première zone sphérique (23) est formée sur la paroi de l'évidement ouvert sur le bord (21) opposée à l'ouverture (22).

3. Dispositif de maintien selon la revendication 2, **caractérisé en ce qu'**il est prévu dans la première zone sphérique (23) un élément intercalaire (4) symétrique de la première zone sphérique (23), le premier élément intercalaire (4) étant disposé de façon pivotante par rapport au logement de dispositif de maintien (2) et l'élément de contact (3) étant relié à l'élément intercalaire (4).

4. Dispositif de maintien selon la revendication 2 ou 3, **caractérisé en ce qu'**il est prévu dans la première zone sphérique (23) une ouverture traversante (25) vers une face extérieure (26) du logement de dispositif de maintien (2) faisant face à la première zone sphérique et la face extérieure (26) est conformée au niveau de l'ouverture traversante (25) comme une deuxième zone sphérique (27), la première zone sphérique (23) et la deuxième zone sphérique (27) étant sensiblement concentriques.

5. Dispositif de maintien selon la revendication 4, **caractérisé en ce qu'**un élément de maintien (5) relié à l'élément de contact (3) s'appuie sur la deuxième zone sphérique (27) au moyen d'un élément d'appui (51), lequel élément d'appui (51) est disposé de façon déplaçable sur la deuxième zone sphérique (27).

6. Dispositif de maintien selon la revendication 5, **caractérisé en ce que** l'élément d'appui (51) est relié de façon amovible à l'élément de maintien (5).

7. Dispositif de maintien selon l'une des revendications 3 à 6, **caractérisé en ce qu'**il est prévu entre l'élément intercalaire (4) et l'élément de contact (3) un élément amortisseur (6), lequel élément amortisseur (6) est de préférence conformé comme un élément à ressort et/ou un élément élastomère.

8. Attelage avec une boule d'attelage et un dispositif de maintien (1) selon l'une des revendications 1 à 7.
